# FASCICULE DE BREVET EUROPEEN

(11) **EP 0 806 262 B1**
(45) Date de publication et mention de la délivrance du brevet: **13.02.2002**
(21) Numéro de dépôt: 97400803.9
(22) Date de dépôt: 08.04.1997
(51) Int. Cl.: B23K 1/08

(54) **Procédé et machine de brasage ou étamage à la vague**
Verfahren und Vorrichtung zum Wellenlöten oder Wellenverzinnen
Method and apparatus for wave soldering or wave tinplating

(30) Priorité: 07.05.1996 FR 9605724
(43) Date de publication de la demande: 12.11.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Leturmy, Marc, 78940 La-Queue-en-Yvelines (FR)
(74) Mandataire: Vesin, Jacques

(56) Documents cités:
- EP-A- 0 621 101
- EP-A- 0 713 742
- US-A- 5 409 159

## Description

L'invention concerne les opérations de brasage ou étamage réalisées à l'aide de machines comportant un bain de soudure liquide, que ce bain soit qualifié de « bain mort » ou qu'il soit mis en mouvement comme dans les machines dites « de brasage à la vague ».

Ces machines sont notamment utilisées pour le brasage de composants électroniques sur un support tel qu'un circuit électronique, ou encore pour l'étamage de terminaisons de composants électroniques.

La conception des machines de brasage à la vague est telle que les circuits à braser ( ou les pièces à étamer) sont amenés en contact avec une ou plusieurs vagues de soudure liquide obtenues par pompage d'un bain de soudure contenu dans un bac au travers d'une buse.

Au préalable, les pièces, ont généralement été fluxées dans une zone amont de la machine, de façon principalement à désoxyder les surfaces métalliques pour faciliter leur mouillage ultérieur par la soudure, l'opération de fluxage étant suivie d'une opération de préchauffage qui est pratiquée tant pour activer les flux précédemment déposés sur le circuit que pour préchauffer les circuits et les composants avant leur arrivée dans la zone chaude de brasage.

La configuration géométrique de la buse détermine la forme de vague de soudure obtenue. Les machines de brasage à la vague comportent le plus communément deux vagues, une première vague dite « turbulente » et une seconde vague dite « laminaire », ce second type de vague offrant une surface supérieure plane relativement étendue.

En l'absence de pièces à braser ou étamer dans la machine, la soudure liquide s'écoule, au niveau de cette vague laminaire, à très faible vitesse vers l'amont de la machine. Lors de l'arrivée d'une pièce au contact de la vague laminaire, on assiste à une inversion partielle de l'écoulement de l'alliage, une partie de cet alliage s'écoulant vers l'aval de la machine.

Les machines sont alors le plus souvent munies d'un système que l'on peut qualifier de déversoir, dont la hauteur permet de régler le débit d'écoulement de la soudure vers l'aval. Ce système de déversoir peut tout simplement être constitué d'une plaque métallique (voir US-A-5 409 159), ou encore d'une goulotte de guidage de la retombée de la soudure vers le bain environnant.

Il est à noter que le débit et la direction de l'écoulement de l'alliage au niveau de cette vague laminaire ont une influence déterminante sur la qualité du brasage obtenu.

Il faut encore noter que certains utilisateurs, pour s'adapter aux caractéristiques très spécifiques de leur production, limitent considérablement le phénomène d'écoulement aval de la soudure, préférant mettre en place un débordement aval très faible voire quasiment nul de la soudure.

Les machines de brasage (ou étamage) à la vague sont traditionnellement ouvertes à l'atmosphère d'air ambiant. Parmi les problèmes que rencontrent les utilisateurs de telles machines, on peut citer la formation de couches d'oxyde (appelées scories) à la surface du bain de soudure du fait de son exposition à l'air, entraînant une perte de soudure non négligeable et la nécessité de régulièrement nettoyer le bain. A titre indicatif, une machine de taille moyenne peut donner lieu à la formation de plus d'un kilo de scorie par heure de fonctionnement.

Si l'on considère maintenant le cas spécifique de la vague laminaire, on comprend aisément qu'un débordement aval nul ou trop faible de la soudure va présenter un inconvénient majeur, par le fait que les scories se formant en permanence sur la surface plane de la vague ne peuvent efficacement s'évacuer, et se déposent alors sur la pièce, entachant de façon significative la qualité de brasage ou étamage obtenue.

On comprendra aisément que ce phénomène de scories décrit ici longuement dans le cas de la surface plane d'une vague laminaire d'une machine de brasage à la vague s'applique à fortiori dans le cas de la surface plane d'un bain mort, sans qu'il soit nécessaire de décrire plus avant.

Différentes solutions techniques ont jusqu'à ici été proposées pour tenter de protéger le bain de soudure des phénomènes d'oxydation par l'air environnant. Ces solutions peuvent être schématiquement classées en trois catégories :
a) une première catégorie de solution consiste dans la mise en place d'une atmosphère de protection confinée, au moins au dessus du bain de soudure, mais également parfois dans le reste de la machine. On a ainsi vu apparaître des machines entièrement inertées, conçues dès le départ comme un tunnel étanche, mais aussi plus simplement des systèmes de capotage ou autre hotte permettant de mettre en place sur des machines existantes classiques ouvertes à l'air ambiant une couverture d'azote au moins au niveau du bain de soudure.
   Dans cette première catégorie de solutions, la demanderesse avait proposé dans le document U.S.-A-5,161,727, un dispositif d'inertage comportant un ensemble de capotages définissant, au moins à l'aplomb du bain de soudure, un espace intérieur séparé de l'atmosphère environnante par des moyens d'étanchéité, des canalisations d'injection du gaz débouchant dans les parties supérieures des capotages qui sont équipées de structures de diffuseurs.
   Si le dispositif d'inertage décrit dans ce document représente incontestablement une amélioration sensible des performances des systèmes existants (notamment en termes d'optimisation du compromis entre débit de gaz injecté et concentration d'oxygène résiduelle atteinte au dessus du bain de soudure), reste que ce système représente des conceptions relativement complexes et coûteuses puisque devant s'adapter presque sur mesure à chacun des types de machines de brasage à la vague présentes sur le marché.
b) une seconde catégorie de solutions utilise la mise en place d'atmosphères de protection non confinées, via des injecteurs localisés à proximité des vagues de soudure, sans fermeture de l'espace situé au-dessus des vagues.
   On peut citer dans cette seconde catégorie les dispositifs rapportés dans le document WO 93/11653.
   Compte tenu de leur configuration très localisée, on conçoit que la qualité de l'inertage obtenu par ces procédés est difficile à maîtriser, nécessitant en pratique la mise en oeuvre de deux injecteurs symétriques pour parvenir à atteindre un taux d'oxygène faible.
   Par ailleurs, aucun des documents de cette catégorie de solution n'aborde et ne solutionne les problèmes spécifiques que posent les vagues laminaires.
c) la troisième catégorie de solutions au problème de la formation des scories met en oeuvre l'utilisation, à la surface de la vague laminaire, d'une pellicule d'huile à fort pouvoir couvrant.

Les systèmes de protection à l'huile présentent les inconvénients classiques de l'utilisation d'huile (notamment en présence d'une source de température), qui sont en particulier la présence de dépôts d'huile sur la carte nécessitant la réalisation d'un nettoyage souvent difficile et imparfait, la nécessité de réaliser fréquemment des périodes de maintenance de la machine du fait de l'accumulation d'huile dans le bain de soudure, ou encore les émanations de vapeurs d'huile qui représentent incontestablement une nuisance pour l'environnement, qu'il soit matériel ou humain.

Un des objectifs de la présente invention est alors de proposer une machine de brasage ou étamage à la vague permettant de réaliser un inertage localisé (donc sans nécessité d'utiliser un système de confinement) de la surface plane d'une vague laminaire (vague laminaire qui présente comme on l'a vu des problèmes tout à fait spécifiques de fonctionnement dus à son écoulement extrêmement faible), la conception de la machine devant permettre d'obtenir de façon très simple et économique un très bon compromis entre la teneur résiduelle en oxygène atteinte à la surface de la vague laminaire et le débit de gaz mis en oeuvre au niveau de cette vague, ce débit devant si nécessaire, pour répondre aux spécifications économiques de certains sites utilisateurs, pouvoir se situer au-dessous de 10m³/h, et préférentiellement inférieur ou égal à 5m³/h.

Selon un des autres objectifs de la présente invention, on cherche à proposer des conditions permettant d'atteindre une réduction significative de la formation des scories sur la surface plane de la vague laminaire d'une machine.

Les travaux menés à bien par la demanderesse ont montré qu'il était possible d'obtenir de tels résultats par l'utilisation d'un injecteur de gaz localisé en position adjacente et en aval de la vague laminaire, muni d'une paroi située en regard de cette vague, cette paroi comportant au moins un premier groupe d'orifices positionné sur la paroi de manière à permettre l'obtention d'un premier jet de gaz dirigé vers la surface plane de la vague laminaire.

Ces travaux ont également démontré l'aspect avantageux de la mise en oeuvre combinée des mesures suivantes :
- utiliser un système de déversoir se présentant par exemple sous la forme d'une plaque ou d'une goulotte de guidage du déversement aval de la soudure vers le bain, dont le réglage de la hauteur par rapport à la vague permet de régler le débit de débordement de la vague laminaire vers l'avant (i.e. l'aval de la machine);
   . dans le cas de l'utilisation d'une plaque, rendre cette plaque plongeante dans la bain de soudure;
   . dans le cas de l'utilisation d'une goulotte, utiliser une goulotte plongeante dans le bain, ou encore munir la goulotte d'une jupe plongeant dans le bain, prolongeant en quelque sorte son action ;
- l'utilisation d'un injecteur de gaz localisé en position adjacente et en aval de la vague laminaire, muni d'une paroi située en regard de cette vague, cette paroi comportant au moins deux groupes d'orifices permettant de diriger le gaz vers la vague, un premier groupe d'orifices étant positionné de manière à permettre l'obtention d'un premier jet de gaz dirigé vers la surface plane de la vague laminaire, alors qu'un second groupe d'orifices est positionné sur la paroi de manière à permettre l'injection d'un second jet de gaz dans l'espace situé entre la plaque et l'injecteur (cas du déversoir « plaque ») ou à l'intérieur de la jupe (cas du déversoir « goulotte »).

Comme développé plus en détails ci-dessous dans le cadre d'exemples, la mise en oeuvre combinée de ces mesures a montré une très grande efficacité d'inertage, y compris dans le cas difficile de la vague laminaire très stagnante, sans nécessité d'une quelconque mesure de confinement : il a ainsi été montré qu'il était possible d'obtenir, lors du passage des cartes, une teneur résiduelle en oxygène de seulement quelques dizaines de ppm, pour un débit de gaz très raisonnable (de seulement quelques m³/h).

La machine de brasage ou étamage à la vague selon l'invention est décrite à la revendication 1, ainsi qu'à la revendication 12.

Comme signalé précédemment, selon l'invention, la machine comporte un système de déversoir dont le réglage de la hauteur par rapport à la vague permet de régler le débit de débordement de la vague vers l'aval, le système de déversoir se présentant sous la forme d'une goulotte, plongeante dans le réservoir de soudure, ou munie d'une structure de jupe plongeante dans le réservoir de soudure, la paroi comportant un second groupe d'orifices, positionné sur la paroi de manière à permettre d'injecter un second jet de gaz à l'intérieur de la goulotte ou de la jupe.

Selon une des mises en oeuvre de l'invention, l'injecteur et la goulotte ont alors une paroi commune, celle ci est muni des orifices d'injection. Comme on pourra mieux le visualiser plus loin dans le cadre des figures, pour une telle configuration, le gaz du second jet passe directement de l'intérieur de l'injecteur à l'intérieur de la jupe.

Cette configuration présente des avantages significatifs en termes de facilité de fabrication de l'ensemble, et donc de coût de réalisation.

La réalisation de l'injection d'un second jet de gaz à l'intérieur de la jupe pourra par exemple être obtenue en disposant le second groupe d'orifices en regard d'une ouverture délimitée dans une paroi de la jupe, ou encore à l'interface entre la jupe et la goulotte, ou encore dans la partie inférieure de la goulotte, selon la géométrie initiale adoptée.

La direction « aval » doit se comprendre en considérant le sens de convoyage des pièces à braser dans la machine.

Les « orifices » de délivrance de gaz selon l'invention doivent s'entendre comme tout type de configuration de trous permettant au gaz de s'échapper de l'injecteur, qu'il s'agisse par exemple de classiques orifices circulaires ou encore de fentes.

On positionnera avantageusement le premier groupe d'orifices sur la paroi de l'injecteur de façon à diriger le premier jet de gaz de façon tangentielle à la surface plane de la vague laminaire. Une telle disposition favorisera l'obtention d'un effet COANDA du jet de gaz sur la surface de la vague, rendant ainsi l'inertage plus efficace.

Une telle disposition d'injection du second jet de gaz à l'intérieur de la jupe s'est révélée d'une efficacité surprenante pour éviter les phénomènes parasites d'entraînement d'air par le premier jet de gaz.

On dimensionnera avantageusement les orifices d'au moins un des groupes d'orifices de façon à permettre l'obtention d'une vitesse de gaz en sortie des orifices considérés comprise dans l'intervalle entre 0,5 et 30 m/s. Mais on fonctionnera préférentiellement dans la gamme de vitesse allant de 0,5 à 10 m/s, et plus préférentiellement dans la gamme réduite allant de 0,5 à 5 m/s.

Selon une des mises en oeuvre de l'invention, les moyens d'injection s'étendent sur la totalité de la largeur de la vague laminaire, s'adaptant ainsi plus efficacement à toutes des dimensions de pièces qu'il est possible de traiter dans la machine considérée.

Selon une des mises en oeuvre de l'invention, le premier groupe d'orifices est constitué d'au moins une rangée de fentes délimitées dans la paroi de l'injecteur faisant face à la vague.

Les moyens d'injection peuvent comporter des moyens de délivrer le gaz à l'intérieur de l'injecteur, qui pourront par exemple être constitués d'un tube poreux situé à l'intérieur même de l'injecteur, et apte à être alimenté de l'extérieur en le gaz considéré, ou encore d'une simple « clarinette », terme qui recouvre traditionnellement la notion de tube percé de trous.

Selon un aspect de l'invention, l'injecteur est muni d'une face ou paroi supérieure. Les travaux menés à bien par la demanderesse ont démontré qu'il est alors avantageux de mettre en oeuvre une pièce déflectrice solidaire de cette paroi supérieure.

Une telle pièce déflectrice s'étend préférentiellement sur la totalité de la longueur de l'injecteur,

Selon un mode avantageux de mise en oeuvre de l'invention, les dimensions de la pièces déflectrice (au besoin en tenant compte de la position de l'injecteur par rapport à la vague) sont telles que la pièce déflectrice s'étend en largeur de façon à au moins couvrir le système de déversoir (par exemple la goulotte).

La position de l'injecteur sera préférentiellement ajustable horizontalement et/ou verticalement.

Comme il apparaîtra clairement à l'homme du métier, la machine de brasage ou étamage selon l'invention permet de mettre en oeuvre, au niveau de l'injecteur, tout type de gaz, qu'il soit neutre (comme l'azote quel que soit son mode de production et sa pureté) ou bien plus actif comme par exemple des mélanges gaz neutre/gaz réducteur.

L'invention concerne également un procédé de brasage ou étamage à la vague selon la revendication 10.

D'autres caractéristiques et avantages de l'invention ressortiront de la description suivante de modes de réalisation donnée à titre illustratif mais nullement limitatif, faite en relation avec les dessins annexés sur lesquels :
- la figure 1 est une représentation schématique d'une structure classique de machine de brasage à la vague ;
- la figure 2 est une coupe partielle et schématique d'une structure à deux vagues, turbulente et laminaire ;
- la figure 3 est une représentation schématique d'une vague laminaire en situation d'attente de pièces (écoulement de soudure vers l'amont) ;
- la figure 4 est une représentation schématique d'une vague laminaire en situation de brasage (avec écoulement de la soudure partiellement inversé : une partie de la soudure s'écoule vers l'aval avec déversement dans la goulotte 10);
- la figure 5 est une représentation schématique partielle d'une machine conforme à l'invention ;
- la figure 6 est une représentation schématique partielle d'une machine conforme à l'invention, dont les moyens d'injection intègrent une pièce déflectrice 13;
- la figure 7 est une vue détaillée de l'injecteur 12 de la figure 6 intégrant une pièce déflectrice 13;
- la figure 8 est une représentation schématique d'un exemple de réalisation de l'ensemble goulotte/injecteur lorsqu'ils présentent une paroi commune;
- les figures 9, 10 et 11 schématisent trois structures de machines ayant été utilisées pour réaliser des exemples de mise en oeuvre de l'invention ainsi que des exemples comparatifs (exemples qui seront détaillés plus loin dans la présente description).

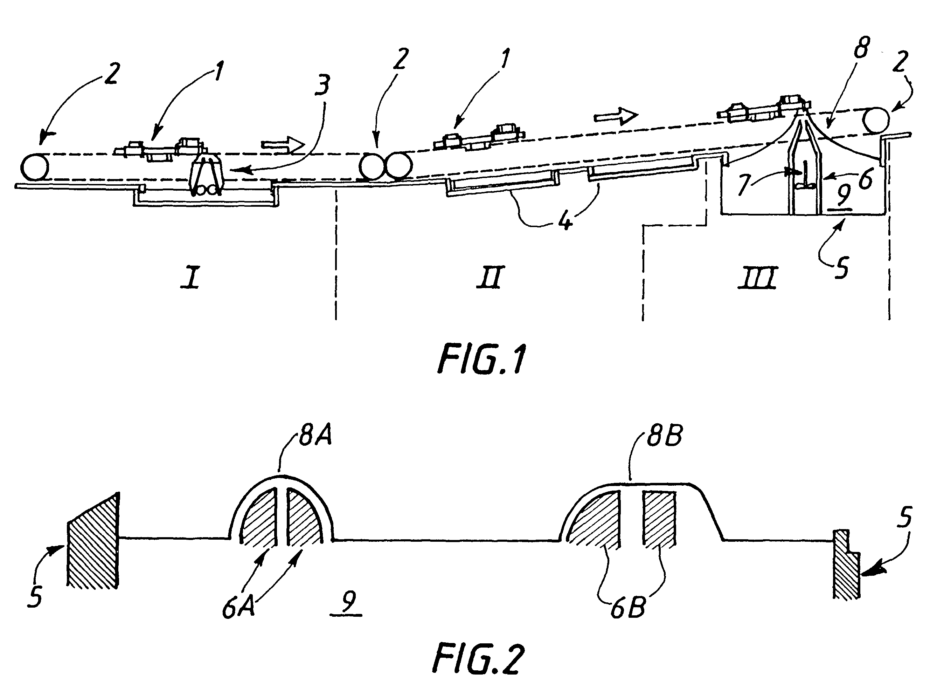

La machine de brasage à la vague schématisée en figure 1 comporte trois zones : une zone I de fluxage des pièces 1 par un système de fluxage 3 (par exemple du type à mousse), une zone II de préchauffage des pièces fluxées, grâce aux moyens 4 par exemple constitués de lampes infra rouge, et une zone III de brasage proprement dit où les pièces 1 rencontrent, dans le mode de réalisation représenté, une vague unique de soudure 8 obtenue par pompage (7) du bain de soudure 9 au travers d'une buse de soudure 6.

Les cartes 1 sont convoyées le long des différentes zones de la machine à l'aide d'un système de convoyage 2 par exemple constitué de cadres se déplaçant sur deux bandes latérales situées de chaque coté de la machine, ou encore de chaînes de convoyage « à doigts ».

La figure 2 fournit une vue schématique en coupe et partielle d'un cas où le bain de soudure 9 donne lieu à la formation d'une structure de double vague, une première vague dite turbulente 8a de structure relativement abrupte (obtenue grâce à la structure de buse 6a), et une seconde vague 8b de structure laminaire, offrant une surface supérieure plane de dimension relativement étendue, obtenue elle grâce à la structure de buse 6b.

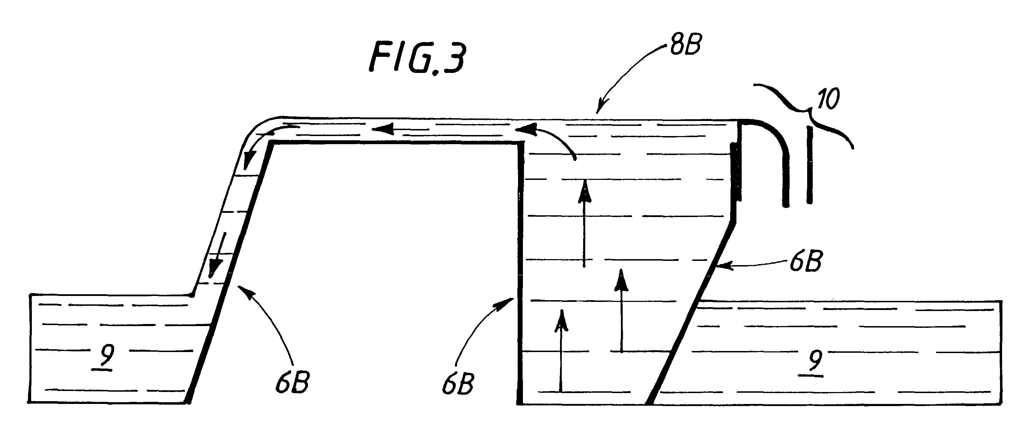

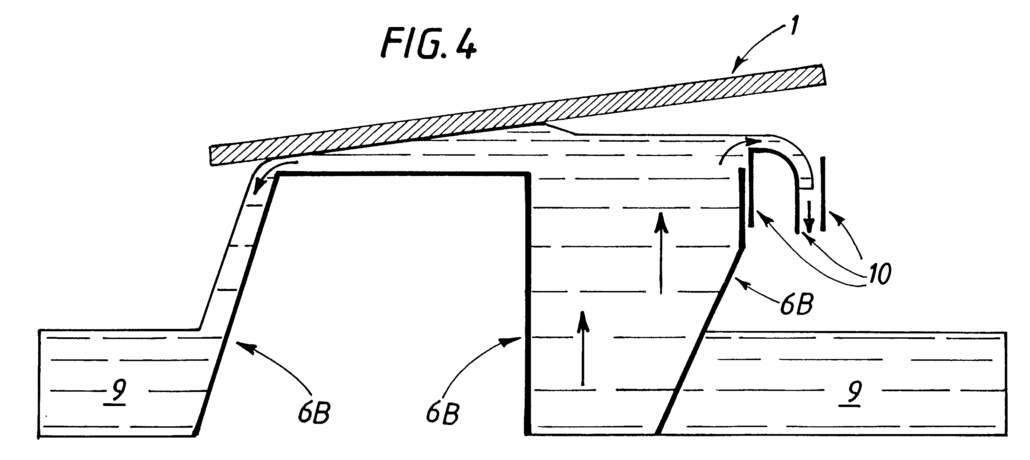

Les figures 3 et 4 illustrent l'écoulement de la soudure de la vague laminaire 8b respectivement dans une situation d'attente de pièces et en situation de brasage d'une carte 1.

La figure 3 illustre donc une situation d'attente de pièce avec écoulement de la soudure vers l'amont de la machine. Le mode de réalisation représenté ici inclut l'utilisation d'un système de déversoir 10, se présentant sous la forme d'une goulotte de guidage, situé juste en aval de la buse, et permettant par le réglage de sa hauteur, de régler le débit de déversement de la soudure vers l'aval (ici en l'occurrence un écoulement nul ou quasiment nul).

Si cette figure fourni une coupe verticale de la structure de la goulotte, comme il apparaîtra clairement à l'homme du métier, l'espace entre les deux « murs » de la goulotte est fermé en ses deux extrémités par les montants du réservoir ou bien encore par deux plaques spécifiques disposées à chaque extrémité (définissant en coupe horizontale une structure rectangulaire ou quasi rectangulaire).

Le phénomène éventuel de déversement partiel aval est mieux visualisé dans le cadre de la figure 4.

L'arrivée de la pièce 1 sur la vague laminaire provoque une inversion partielle de l'écoulement de la soudure liquide vers l'aval de la machine (i.e vers l'avant), le débit de déversement vers l'avant étant réglable par le réglage de la hauteur du système de goulotte 10. L'utilisation d'une telle goulotte (au lieu d'une simple plaque accolée à la buse 6b permet par ailleurs de mieux guider et ramener le déversement de soudure vers le bain 9.

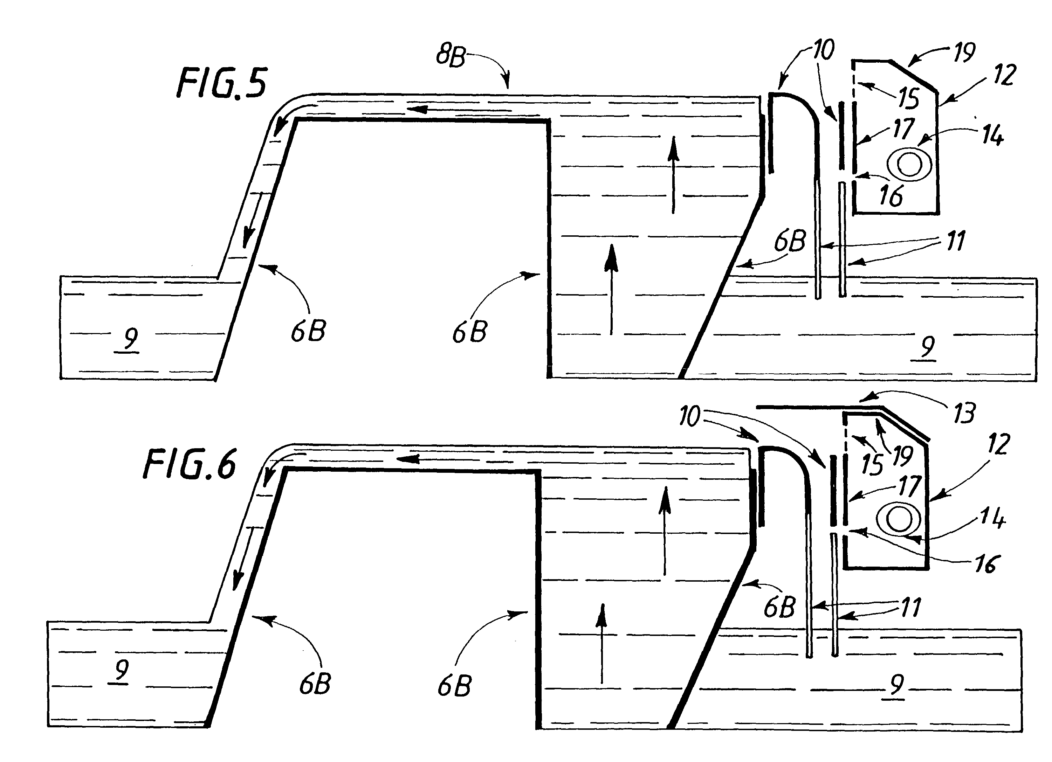

La figure 5 illustre de façon schématique et partielle un mode de réalisation d'une machine de brasage ou étamage à la vague conforme à l'invention, la représentation étant partielle car centrée sur l'arrangement vague laminaire/injecteur/goulotte/jupe.

La vague est ici représentée en position d'attente de pièces avec écoulement vers l'amont.

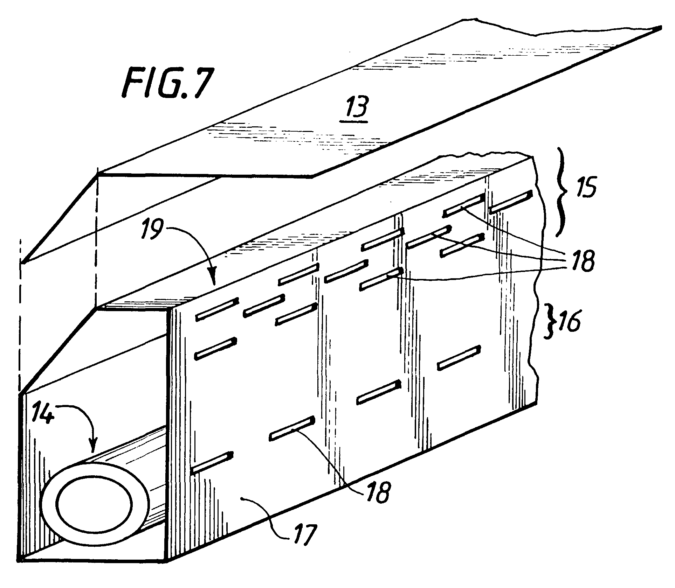

On reconnaît alors sur la figure la présence d'une jupe plongeante 11, solidaire du système de goulotte 10, en regard desquels est positionné un injecteur de gaz 12, possédant une face ou paroi 17, qui comporte deux groupes d'orifices 15 et 16 dont la structure sera détaillée plus loin dans le cadre d'une vue en perspective figure 7.

Comme on l'aura compris à la lumière de toute la description qui précède, on a fait le choix de représenter sur cette figure 5 la goulotte et la jupe dont elle est solidaire par deux traits différents, ceci pour faciliter la compréhension de la figure. Comme déjà signalé précédemment, goulotte et jupe peuvent selon l'invention ne pas être deux pièces disjointes rendues solidaires, on peut également utiliser dès l'origine une goulotte plongeante.

Les groupes d'orifices 15 et 16 sont respectivement positionnés de façon à pouvoir diriger un premier jet de gaz vers la surface plane de la vague laminaire 8b, et un second jet de gaz à l'intérieur de la jupe plongeante 11. Comme signalé précédemment, la présence de la jupe plongeante 11 et du second jet de gaz à l'intérieur de la jupe est tout particulièrement efficace pour éviter d'éventuels effets d'entraînement d'air sur la surface plane de la vague laminaire.

On remarquera la présence à l'intérieur de l'injecteur 12 d'un tube poreux 14, alimenté depuis l'extérieur en gaz, et répartissant ce gaz à l'intérieur de la chambre d'expansion que constitue le corps de l'injecteur 12.

La structure schématisée en figure 6 est similaire à celle représentée dans le cadre de la figure 5, à l'exception de la présence d'une pièce déflectrice 13 solidaire d'une paroi supérieure 19 de l'injecteur 12.

Ici encore, comme développé plus en détail ci-dessous dans le cadre d'exemples, la présence de la pièce déflectrice 13 s'est révélée très efficace pour atteindre si nécessaire des teneurs résiduelles d'oxygène très faibles au niveau de la surface plane de la vague laminaire.

Cette figure 6 illustre un mode avantageux de mise en oeuvre de l'invention où la largeur de la pièce déflectrice (au besoin en combinaison avec la position de l'injecteur par rapport à la vague) permet de s'étendre jusqu'à au moins recouvrir le système de goulotte.

La figure 7, qui est une vue partielle détaillée de l'injecteur 12 et de la pièce déflectrice 13 de la figure 6, permet de mieux comprendre la position respective de la pièce déflectrice 13 et de l'injecteur 12, notamment l'aménagement de cette pièce déflectrice 13 sur la paroi supérieure 19 de l'injecteur. Cette figure permet par ailleurs de mieux visualiser la configuration d'orifices des deux groupes d'orifices 15 et 16.

Sur le mode de réalisation représenté, les groupes d'orifices 15 et 16 sont respectivement constitués de trois et d'une rangée de fentes 18, situées toutes deux sur la paroi 17 de l'injecteur 12, et s'étendant sur toute la longueur de cet injecteur.

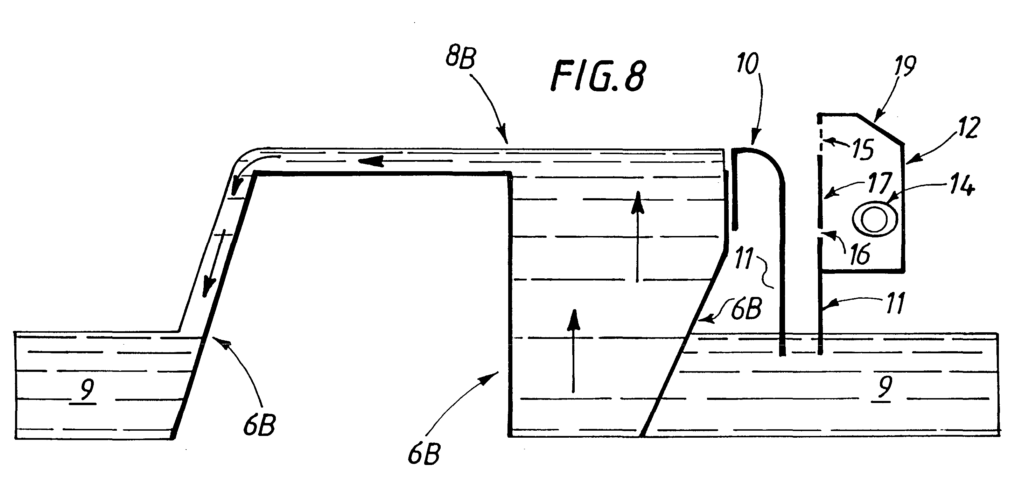

La figure 8 illustre un mode particulier de l'invention ou goulotte et injecteur ont une paroi commune. On note en effet que la paroi 17 de l'injecteur forme ici une des parois de la goulotte, cette paroi se prolongeant par un des cotés de la jupe 11.

On note également que dans une telle configuration, le second jet de gaz en provenance du second groupe 16 d'orifices passe directement de l'intérieur de l'injecteur 12 à l'intérieur de la jupe 11.

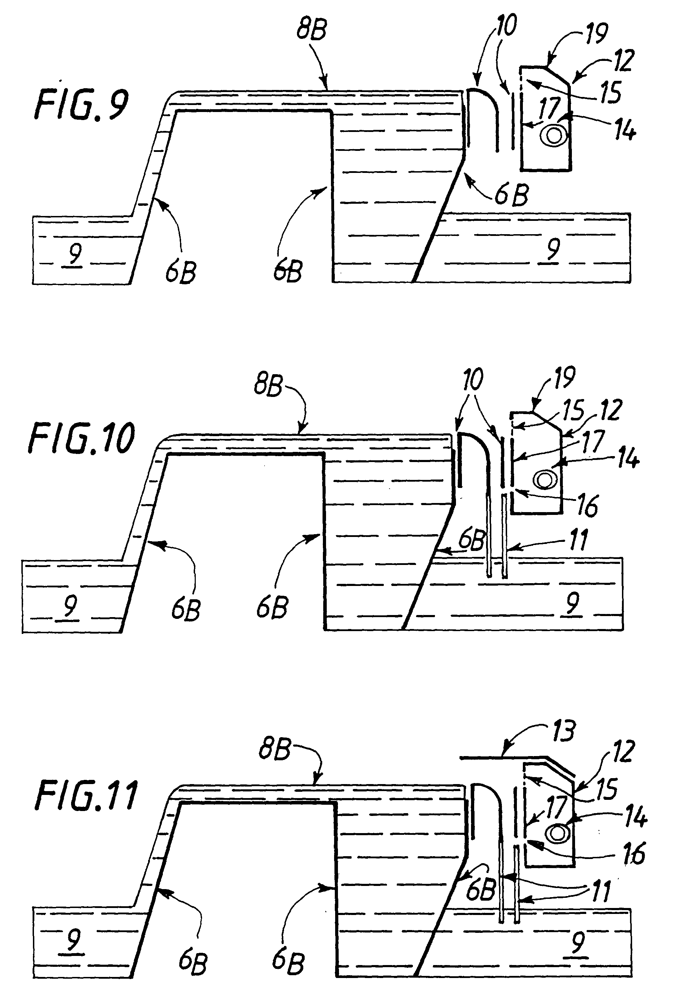

Les figures 9, 10 et 11 illustrent les configurations dans lesquelles ont été obtenus les exemples détaillés plus loin :
- figure 9 (Exemple non couvert par les revendications): la goulotte 10 n'est pas munie d'une jupe (ou tout simplement la goulotte n'est pas plongeante) et la paroi 17 de l'injecteur n'est pas munie du second groupe d'orifices;
- figure 10 : la goulotte 10 est munie d'une jupe 11 et la paroi 17 de l'injecteur est munie du second groupe d'orifices;
- figure 11 : une configuration identique à celle de la figure 10, mais comprenant de plus une pièce déflectrice 13.

Un premier type d'évaluation a été effectué à l'aide de ces trois configurations, sur une machine de brasage à la vague double vague : une mesure de la teneur résiduelle en oxygène à la surface de la vague laminaire, en présence et en l'absence de cartes à braser. Une observation de la formation ou non de scories sur la surface plane de la vague laminaire a été également systématiquement réalisée.

Dans tous les cas, le débit d'azote mis en oeuvre par l'injecteur est de 80 l/mn

L'azote utilisé était de l'azote d'origine cryogénique dont la concentration résiduelle d'oxygène est inférieure ou égale à 10 ppm.

Un second type d'évaluation a été effectué dans le cas de la structure de la figure 11 : l'évaluation de la présence ou non de deux types de défauts de brasage sur des cartes électroniques brasées dans la machine : les manques de soudure et les court circuits (ponts de soudure). L'évaluation a été effectuée tant sous azote (débit ci-dessus mentionné) que sous air.

Les résultats observés peuvent être résumés de la façon suivante :

### a1) teneur résiduelle (volumique) en oxygène :

cas de la figure 9 :
   - en l'absence de cartes : ≅ 120000 ppm;
   - en présence de cartes : < 1 %;
cas de la figure 10 :
   - en l'absence de cartes : ≅ 30000 ppm;
   - en présence de cartes : ≅ 70 ppm;
cas de la figure 11 :
   - en l'absence de cartes : ≅ 8000 ppm;
   - en présence de cartes : ≅ 45 ppm;

### a2) observation des scories :

Le taux des scories en présence des cartes pour toutes les configurations testées était largement diminué, les deux dernières configurations permettant même de conserver à la surface plane de la vague son traditionnel aspect de miroir.

### b) taux de défauts de brasage :

les résultats ici décrits (en ppm de défauts) représentent les résultats cumulés pour 200 cartes brasées.

| | sous air | sous N₂ |
|---|---|---|
| court-circuit | ≅ 4800 | ≅ 2000 |
| manques de soudure | ≅ 200 | ≅ 70 |

On le constate donc à la lecture de l'ensemble de ces résultats, la machine et le procédé de brasage à la vague selon l'invention permettent, de façon spectaculaire, d'atteindre, pour une consommation d'azote extrêmement raisonnable, des teneurs résiduelles en oxygène à la surface de la vague laminaire très faibles, correspondant de façon cohérente avec une nette amélioration des performances de brasage obtenues, et à d'excellent résultats dans le domaine des scories.

## Revendications

1. Machine de brasage ou étamage à la vague comportant :
- un réservoir de soudure (9) ;
- des moyens permettant de former au moins une vague de soudure de forme dite laminaire (8b);
- un système de convoyage (2) permettant d'amener une pièce(1) à braser ou étamer en contact avec ladite vague laminaire ;
- des moyens d'injection (12) de gaz au voisinage de la vague;
- un système de déversoir (10) dont le réglage de la hauteur par rapport à la vague permet de régler le débit de débordement de la vague vers l'aval,
**caractérisée en ce que** :
- le système de déversoir se présente sous la forme d'une goulotte, plongeante dans le réservoir de soudure ou munie d'une structure (11) de jupe plongeante dans le réservoir de soudure , et **en ce que**
- les moyens d'injection comprennent un injecteur, situé en position adjacente en aval de la vague, et muni d'une paroi (17) située en regard de la vague de soudure, ladite paroi comportant au moins un premier groupe (15) d'orifices positionné de manière à permettre l'obtention d'un premier jet de gaz dirigé vers la surface plane de la vague de soudure, ladite paroi de l'injecteur comportant un second groupe (16) d'orifices, positionné sur la paroi de manière à permettre d'injecter un second jet de gaz à l'intérieur de la goulotte ou de la jupe plongeante de la goulotte.

2. Machine selon la revendication 1, **caractérisée en ce que** l'injecteur et la goulotte ont une paroi (17) commune.

3. Machine selon l'une des revendications précédentes, **caractérisée en ce que** le premier groupe d'orifices est positionné de manière à diriger le premier jet de gaz tangentiellement à la surface plane de la vague laminaire.

4. Machine selon l'une des revendications 1 à 3, **caractérisée en ce que** les orifices d'au moins l'un des deux groupes sont dimensionnés de façon à permettre l'obtention d'une vitesse de gaz en sortie d'orifice comprise entre 0,5 et 30 m/s, préférentiellement entre 0,5 et 10 m/s.

5. Machine selon l'une des revendications 1 à 4,
**caractérisée en ce que** au moins l'un des deux groupes d'orifices est constitué d'au moins une rangée de fentes (18).

6. Machine selon l'une des revendications 1 à 5, **caractérisée en ce que** l'injecteur de gaz s'étend sur la totalité de la largeur de la vague laminaire.

7. Machine selon l'une des revendications précédentes, **caractérisée en ce que** l'injecteur est muni d'une paroi supérieure (19).

8. Machine selon la revendication 7, **caractérisée en ce qu'**elle comprend une pièce déflectrice (13) solidaire de la paroi supérieure de l'injecteur.

9. Machine selon la revendication 8, **caractérisée en ce que** la pièce déflectrice s'étend sur la totalité de la largeur de l'injecteur.

10. Procédé de brasage ou étamage à la vague, au cours duquel une pièce à braser ou étamer est amenée en contact avec au moins une vague de soudure liquide de forme dite laminaire, selon lequel on dirige un gaz de protection sur au moins une portion de la vague, et selon lequel on règle le débit de débordement de la vague de soudure vers l'aval par l'utilisation d'un système de déversoir de hauteur réglable par rapport à la vague,
**caractérisé en ce que** le système de déversoir se présente sous la forme d'une goulotte plongeante dans le réservoir de soudure ou bien munie d'une jupe plongeant dans le réservoir de soudure, et **en ce que** l'on dirige le gaz de protection sur la vague au moyen d'un injecteur situé en position adjacente en aval de la vague, et muni d'une paroi située en regard de la vague, comportant au moins un premier groupe d'orifices positionné sur la paroi de manière à permettre l'obtention d'un premier jet de gaz dirigé vers la surface plane de la vague laminaire, et un second groupe d'orifices positionné sur la paroi de manière à permettre l'injection d'un second jet de gaz à l'intérieur de la goulotte ou de la jupe plongeante de la goulotte.

11. Procédé selon la revendication 10, **caractérisé en ce que** la vitesse de gaz en sortie d'orifices d'au moins un des deux groupes d'orifices est comprise entre 0,5 et 30 m/s, préférentiellement entre 0,5 et 10 m/s, et plus préférentiellement entre 0,5 et 5 m/s.

12. Machine de brasage ou étamage à la vague comprenant un dispositif d'inertage de la vague laminaire, la dite machine de brasage ou étamage comportant un système de déversoir, dont le réglage de la hauteur par rapport à la vague permet de régler le débit de débordement de la vague de soudure vers l'aval de la machine, **caracterisée en ce que** le système de déversoir se présente sous la forme d'une goulotte de guidage, plongeante dans le réservoir de soudure ou bien munie d'une jupe plongeant dans le réservoir de soudure, le dispositif d'inertage comportant un injecteur de gaz positionnable en position adjacente en aval de la vague laminaire, et muni d'une paroi située en regard de la vague laminaire, la paroi comportant au moins un premier groupe d'orifices positionné sur la paroi de manière à permettre l'obtention d'un premier jet de gaz dirigé vers la surface plane de la vague laminaire, la paroi de l'injecteur étant également munie d'un second groupe d'orifices, positionné sur la paroi de manière à permettre l'obtention d'un second jet de gaz dirigé à l'intérieur de la goulotte ou de la jupe plongeante de la goulotte.

13. Machine selon la revendication 12, **caractérisée en ce que** l'injecteur est muni d'une paroi supérieure (19), et **en ce qu'**il comprend une pièce déflectrice (13) solidaire de la paroi supérieure de l'injecteur.

## Claims

1. Wave soldering or wave tinning machine comprising:
- a solder reservoir (9);
- means making it possible to form at least one solder wave in laminar form (8b);
- a conveying system (2) for bringing a piece (1) that is to be soldered or tinned into contact with the said laminar wave;
- means (12) of injecting gas near the wave;
- a weir system (10), control of the height of which with respect to the wave makes it possible to control the flow rate of the overspill of the wave in the downstream direction,
**characterized in that**:
- the weir system is in the form of a shute dipping into the solder reservoir or equipped with a skirt structure (11) dipping into the solder reservoir, and **in that**
- the injecting means comprise an injector situated in an adjacent position downstream of the wave and equipped with a wall (17) situated facing the solder wave, the said wall comprising at least one first group (15) of orifices positioned in such a way as to make it possible to obtain a first jet of gas directed towards the flat surface of the solder wave, the said wall of the injector comprising a second group (16) of orifices, which is positioned on the wall in such a way as to inject a second jet of gas into the shute or into the dipping skirt of the shute.

2. Machine according to Claim 1, **characterized in that** the injector and the shute have a common wall (17).

3. Machine according to one of the preceding claims, **characterized in that** the first group of orifices is positioned in such a way as to direct the first jet of gas tangentially to the flat surface of the laminar wave.

4. Machine according to one of Claims 1 to 3, **characterized in that** the orifices of at least one of the two groups are dimensioned in such a way as to make it possible to obtain a gas velocity at the exit of an orifice of between 0.5 and 30 m/s, preferably between 0.5 and 10 m/s.

5. Machine according to one of Claims 1 to 4, **characterized in that** at least one of the two groups of orifices consists of at least one row of slits (18).

6. Machine according to one of Claims 1 to 5, **characterized in that** the gas injector extends across the entire width of the laminar wave.

7. Machine according to one of the preceding claims, **characterized in that** the injector is equipped with an upper wall (19).

8. Machine according to Claim 7, **characterized in that** it comprises a deflector piece (13) secured to the upper wall of the injector.

9. Machine according to Claim 8, **characterized in that** the deflector piece extends across the entire width of the injector.

10. Method for wave soldering or wave tinning, during which a piece to be soldered or tinned is brought into contact with at least one wave of liquid solder of laminar form, whereby a protective gas is directed over at least one portion of the wave, and whereby the flow rate of the overspill of the solder wave in the downstream direction is controlled by use of a weir system the height of which is adjustable with respect to the wave, **characterized in that** the weir system is in the form of a shute dipping into the solder reservoir or alternatively equipped with a skirt dipping into the solder reservoir, and **in that** the protective gas is directed over the wave by means of an injector situated in an adjacent position downstream of the wave, and equipped with a wall situated facing the wave, comprising at least one first group of orifices which is positioned on the wall in such a way as to make it possible to obtain a first jet of gas directed towards the flat surface of the laminar wave, and a second group of orifices which is positioned on the wall in such a way as to allow a second jet of gas to be injected into the shute or into the dipping skirt of the shute.

11. Method according to Claim 10, **characterized in that** the velocity of the gas leaving the orifices of at least one of the two groups of orifices is between 0.5 and 30 m/s, preferably between 0.5 and 10 m/s, and more preferably still, between 0.5 and 5 m/s.

12. Wave soldering or wave tinning machine comprising a device for inerting the laminar wave, the said soldering or tinning machine comprising a weir system, control of the height of which with respect to the wave makes it possible to control the flow rate of the overspill of the solder wave in the downstream direction of the machine, **characterized in that** the weir system is in the form of a guide shute dipping into the solder reservoir or alternatively equipped with a skirt dipping into the solder reservoir, the inerting device comprising a gas injector that can be positioned in an adjacent position downstream of the laminar wave, and equipped with a wall situated facing the laminar wave, the wall comprising at least one first group of orifices which is positioned on the wall in such a way as to make it possible to obtain a first jet of gas directed towards the flat surface of the laminar wave, the wall of the injector also being equipped with a second group of orifices positioned on the wall in such a way as to make it possible to obtain a second jet of gas directed into the shute or into the dipping skirt of the shute.

13. Machine according to Claim 12, **characterized in that** the injector is equipped with an upper wall (19) and **in that** it comprises a deflector piece (13) secured to the upper wall of the injector.

## Patentansprüche

1. Vorrichtung zum Wellenlöten oder Wellenverzinnen, umfassend:
- einen Behälter für das Lötmetall (9);
- Mittel, die es ermöglichen, wenigstens eine Lötwelle von laminarer Form zu bilden (8b);
- ein Transportsystem (2), das es ermöglicht, ein zu lötendes oder zu verzinnendes Teil (1) in Kontakt mit der besagten laminaren Welle zu bringen;
- Mittel (12) zum Einblasen von Gas in die Nähe der Welle;
- ein Überlaufsystem (10), dessen Regulierung der Höhe in Bezug auf die Welle es möglich macht, den Überlauf der Welle stromabwärts zu regulieren, **dadurch gekennzeichnet, dass**:
- das Überlauf system die Form einer Rinne annimmt, die in den Behälter für das Lötmetall eintaucht oder mit einer Schürzenstruktur (11) ausgerüstet ist, die in den Behälter für das Lötmetall eintaucht, und dass
- die Mittel zum Einblasen eine Einspritzdüse umfassen, die neben und stromabwärts von der Welle angeordnet ist und mit einer Wand (17) zu der Lötwelle ausgerüstet ist, wobei die besagte Wand wenigstens eine erste Gruppe (15) von Öffnungen aufweist, die auf solche Weise positioniert ist, dass es möglich ist, einen ersten Gasstrahl auf die ebene Oberfläche der Lötwelle zu leiten, und die besagte Wand der Einspritzdüse eine zweite Gruppe (16) von Öffnungen aufweist, die in der Wand auf solche Weise positioniert ist, dass es möglich ist, einen zweiten Gasstrahl in das Innere der Rinne oder der eintauchende Schürze der Rinne einzublasen.

2. Vorrichtung nach Anspruch 1, **dadurch gekennzeichnet, dass** die Einspritzdüse und die Rinne eine gemeinsame Wand (17) haben.

3. Vorrichtung nach einem der vorhergehenden Ansprüche, **dadurch gekennzeichnet, dass** die erste Gruppe von Öffnungen auf solche Weise positioniert ist, dass der erste Gasstrahl tangential auf die ebene Oberfläche der laminaren Welle gerichtet wird.

4. Vorrichtung nach einem der Ansprüche 1 bis 3, **dadurch gekennzeichnet, dass** die Öffnungen von wenigstens einer der zwei Gruppen auf solche Weise dimensioniert sind, dass es möglich ist, am Öffnungsausgang eine Gasgeschwindigkeit zwischen 0,5 und 30 m/s und vorzugsweise zwischen 0,5 und 10 m/s zu erreichen.

5. Vorrichtung nach einem der Ansprüche 1 bis 4, **dadurch gekennzeichnet, dass** wenigstens eine der zwei Gruppen von Öffnungen aus wenigstens einer Reihe von Schlitzen (18) besteht.

6. Vorrichtung nach einem der Ansprüche 1 bis 5, **dadurch gekennzeichnet, dass** die Einspritzdüse des Gases sich über die gesamte Breite der laminaren Welle erstreckt.

7. Vorrichtung nach einem der vorhergehenden Ansprüche, **dadurch gekennzeichnet, dass** die Einspritzdüse mit einer oberen Wand (19) ausgerüstet ist

8. Vorrichtung nach Anspruch 7, **dadurch gekennzeichnet, dass** sie ein Ablenkstück (13) umfasst, das fest mit der oberen Wand der Einspritzdüse verbunden ist.

9. Vorrichtung nach Anspruch 8, **dadurch gekennzeichnet, dass** das Ablenkstück sich über die gesamte Breite der Einspritzdüse erstreckt.

10. Verfahren zum Wellenlöten oder Wellenverzinnen, in dessen Verlauf ein zu lötendes oder verzinnendes Stück in Kontakt mit wenigstens einer flüssigen Lötwelle in laminarer Form gebracht wird, gemäß dem man ein Schutzgas auf wenigstens einen Teil der Welle leitet und gemäß dem man den Überlauf der Lötwelle stromabwärts durch die Verwendung eines Überlaufsystems mit einstellbarer Höhe in Bezug auf die Welle reguliert,
**dadurch gekennzeichnet, dass** das Überlaufsystem die Form einer Rinne annimmt, die in den Behälter für das Lötmetall eintaucht oder mit einer Schürze ausgerüstet ist, die in den Behälter für das Lötmetall eintaucht, und dadurch, dass man das Schutzgas auf die Welle mit Hilfe einer Einspritzdüse leitet, die sich neben und stromabwärts von der Welle befindet und mit einer Wand zu der Welle ausgerüstet ist, die wenigstens eine erste Gruppe von Öffnungen aufweist, die in der Wand auf solche Weise positioniert sind, dass es möglich ist, einen ersten Gasstrahl auf die ebene Oberfläche der laminaren Welle zu leiten, und eine zweite Gruppe von Öffnungen in der Wand auf solche Weise positioniert ist, dass es möglich ist, einen zweiten Gasstrahl in das Innere der Rinne oder der eintauchende Schürze der Rinne einzublasen.

11. Verfahren nach Anspruch 10, **dadurch gekennzeichnet, dass** die Geschwindigkeit des Gases am Ausgang der Öffnungen von wenigstens einer der zwei Gruppen zwischen 0,5 und 30 m/s, in bevorzugter Weise zwischen 0,5 und 10 m/s und in ganz bevorzugter Weise zwischen 0,5 und 5 m/s liegt.

12. Vorrichtung zum Wellenlöten oder Wellenverzinnen, umfassend einen Mechanismus zur Inertisierung der laminaren Welle, wobei die besagte Vorrichtung zum Wellenlöten oder Wellenverzinnen ein Überlaufsystem umfasst, dessen Regulierung der Höhe in Bezug auf die Welle es möglich macht, den Überlauf der Lötwelle stromabwärts von der Vorrichtung zu regulieren, **dadurch gekennzeichnet, dass** das Überlaufsystem die Form einer Führungsrinne annimmt, die in den Behälter für das Lötmetall eintaucht oder mit einer Schürze ausgerüstet ist, die in den Behälter für das Lötmetall eintaucht, der Mechanismus zur Inertisierung eine Einspritzdüse für Gas umfasst, die neben und stromabwärts von der laminaren Welle positioniert werden kann und mit einer Wand zu der laminaren Welle ausgerüstet ist, wobei die Wand wenigstens eine erste Gruppe von Öffnungen umfasst, die in der Wand auf solche Weise angeordnet ist, dass es möglich ist, einen ersten Gasstrahl auf die ebene Oberfläche der laminaren Welle zu leiten, und die Wand der Einspritzdüse ebenfalls mit einer zweiten Gruppe von Öffnungen ausgerüstet ist, die in der Wand auf solche Weise angeordnet ist, dass es möglich ist, einen zweiten Gasstrahl ins Innere der Rinne oder der eintauchenden Schürze der Rinne zu leiten.

13. Vorrichtung nach Anspruch 12, **dadurch gekennzeichnet, dass** die Einspritzdüse mit einer oberen Wand (19) ausgerüstet ist und dass sie ein Ablenkstück (13) umfasst, welches fest mit der oberen Wand der Einspritzdüse verbunden ist.
